# EUROPEAN PATENT SPECIFICATION

(11) **EP 2 818 984 B1**
(45) Date of publication and mention of the grant of the patent: **25.10.2017**
(21) Application number: 12869135.9
(22) Date of filing: 06.11.2012
(51) Int. Cl.: G06F 3/041, G06F 3/048, G06F 3/0488

(54) **TOUCH PANEL INPUT DEVICE AND CONTROL METHOD FOR SAME**
EINGABEVORRICHTUNG FÜR BERÜHRUNGSBILDSCHIRM UND STEUERVERFAHREN DAFÜR
DISPOSITIF DE SAISIE DE PANNEAU TACTILE ET SON PROCÉDÉ DE COMMANDE

(30) Priority: 20.02.2012 JP 2012033968
(43) Date of publication of application: 31.12.2014
(60) Divisional application: 16200866.8
(73) Proprietor: NEC Corporation, Tokyo 108-8001 (JP)
(72) Inventor: SHIMA, Yoshikazu, Kanagawa 211-8666 (JP)
(74) Representative: Vossius & Partner Patentanwälte Rechtsanwälte mbB
(86) International application number: PCT/JP2012/078665
(87) International publication number: WO 2013/125103

(56) References cited:
- WO-A1-2010/113397
- JP-A- 2010 152 827
- JP-A- 2011 175 613
- JP-A- 2011 253 468
- JP-A- 2012 133 523
- US-A1- 2005 110 756
- US-A1- 2005 110 756
- US-A1- 2007 296 981
- US-A1- 2007 296 981
- US-A1- 2009 021 387
- US-A1- 2010 004 029
- US-A1- 2010 004 029
- US-A1- 2011 032 198
- US-A1- 2011 032 198
- US-A1- 2011 157 006
- US-A1- 2011 157 006
- US-A1- 2011 187 661

## Description

### Technical Field

The present invention relates to a touch panel input device and a control method of the touch panel input device.

### Background Art

Touch panels are mounted on many devices, such as smartphones, and the touch panels are growing in usage. The touch panels are used not only to check messages belonging to consumer or entertainment, but also for mission-critical operations such as there related to finance or life. In a typical operation of such touch panels, when the user visually recognizes an object (button or selectable area) displayed on a screen and touches the object (or area of the object) with a finger or the like, software recognizes the selection operation and executes an operation associated in advance with the object.

Techniques for enlarging and displaying a touched area or displaying a pointer when a contact operation to a touch panel is performed are disclosed in, for example JP2007-280316A (Patent Literature 1) and JP2009-26155A (Patent Literature 2).

US 2005/110756 (A1) relates to a position sensing input device for controlling symbols displayed on a display. US 2011/032198 (A1) relates to a display apparatus, a display method and a program that detect an operation performed by a user in a display screen by a device and control display of the display screen according thereto. US 2010/004029 (A1) relates to a mobile terminal capable of changing an input mode and a displayed keypad by tactile touch and/or proximity touch operations, and a keypad displaying method thereof. US 2007/296981 (A1) relates to a method of providing a print preview of a print document that allows a user to preview the print document on a user interface (or a registration window) of a printer driver.

### Summary of Invention

### Technical Problem

As described above, when an input device using the touch panel displays a normal static screen in which the screen display is not autonomously switched, there is no mistake in the chronological order of the user visually recognizing an object and touching the object.

However, when a pop-up display or a button automatically disappears after a certain time period based on a timer or when the display of the screen autonomously switches to an incoming voice call due to an interruption by the incoming voice call or the like, if the timer ends or if an interruption is caused by an incoming voice call or the like before the user touches an object with his/her finger or the like after visually recognizing the object, the finger touches an "object of subsequent screen" displayed on a new screen generated after the end of the timer or the interruption, instead of the intended "object of previous screen".

Therefore, although the user thinks that the user has originally designated an object of the buttons on the pop-up display, the user has actually designated an object on the screen displayed after the pop-up display has disappeared. This is different from the intended operation. In particular, when the buttons arranged on the wrong screen are functions for deleting of user data or for emergency notification transmission, this may be a crucial operational error for the user. Therefore, touch panel operation on a mission-critical system contains a defect that may potentially cause an operational error on the surface of the user interface.

Specific operation will be described below.

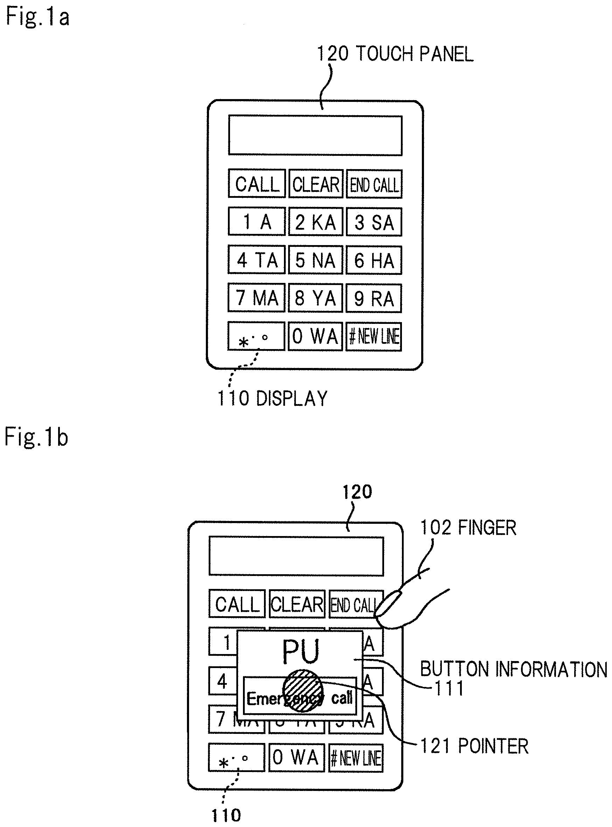

Figures 1a to 1d are diagrams for explaining normal operation in a general touch panel input device.

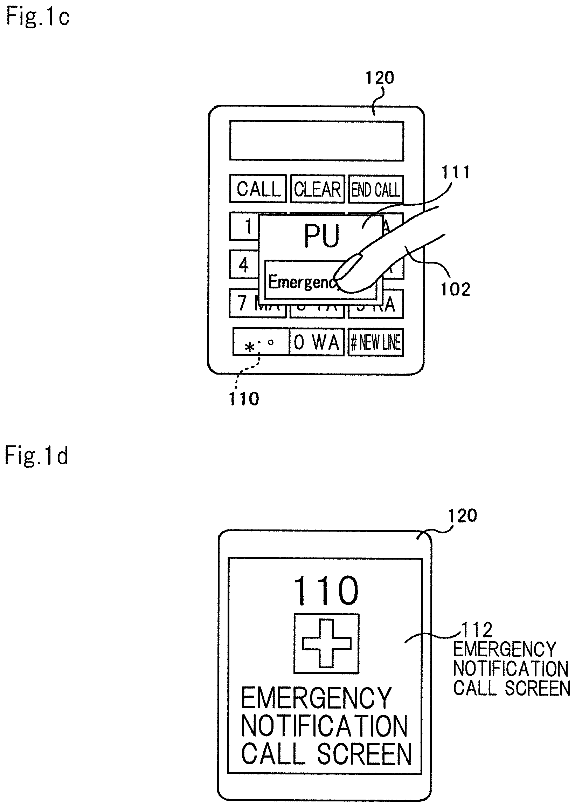

In a touch panel input device having touch panel 120 arranged on display 110 as shown in Figure 1a, when finger 102 approaches button information 111 in a state in which button information 111 on a pop-up display displayed by certain operation on a normal screen is displayed as shown in Figure 1b, pointer 121 is displayed on button information 111. As shown in Figure 1c, when finger 102 touches button information 111, an emergency notification transmission operation is performed because button information 111 is an emergency transmission button. Subsequently, as shown in Figure 1d, emergency notification call screen 112 is displayed, and the user's intended operation is performed.

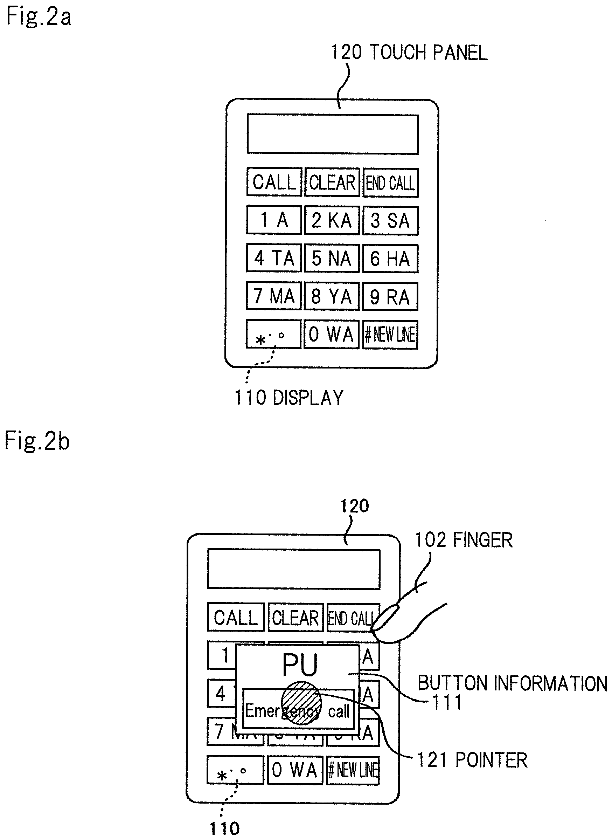

Figures 2a to 2d are diagrams for explaining the wrong operation in a general touch panel input device.

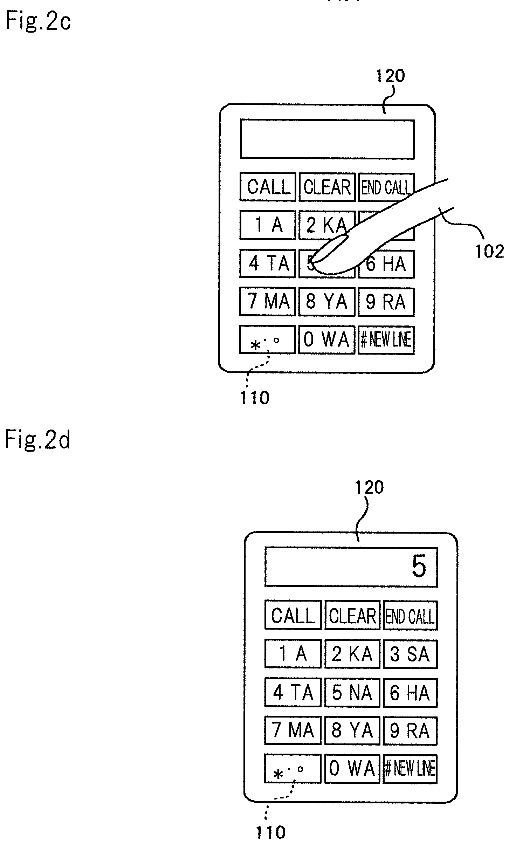

In a touch panel input device having touch panel 120 arranged on display 110 as shown in Figure 2a, when finger 102 approaches button information 111 in a state in which button information 111 on a pop-up display displayed by certain operation on a normal screen is displayed as shown in Figure 2b, pointer 121 is displayed on button information 111. However, some devices have specifications so that when the pop-up display is left unoperated, the pop-up display automatically disappears after a certain time period if the time has expired as a result of using a timer function, and the display on display 110 autonomously switches. In the devices with such specifications, button information 111 based on the pop-up display may disappear as shown in Figure 2c before finger 102 contacts touch panel 120 after the user visually recognizes the screen. Therefore, although the user intends to perform an emergency transmission, operation of pressing a "5" key of voice call displayed in an area where button information 111 has been displayed in display 110 will be performed as shown in Figure 2d.

When such an operation is performed, the operation intended by the user will not be correctly performed. To solve this, a screen not using a pop-up display can be constructed. However, the pop-up display is a general user interface for current smartphones. The construction without using the pop-up display is difficult, and the usability and the visibility are lost.

In a general personal computer or the like, when a cursor of a mouse is placed over an object on a screen (in mouse-over state without selection) in an operation system mainly including a mouse and a keyboard as user interfaces, auxiliary information of the object is displayed. However, in an operation system based on a touch panel, auxiliary information of an object cannot be displayed before the object on the screen is touched. Or an operation associated with the object is performed at the same time as the contact, and the auxiliary information of the object cannot be displayed.

Therefore, there is a problem in which the user of the touch panel experiences stress by not being able to predict the operation in response to touching the object or due to the possibility of performing the wrong operation.

The present invention has been made in view of the problem of the techniques as described above, and an object of the present invention is to provide a touch panel input device and a control method of the touch panel input device that can prevent a wrong operation from being caused by the switch of a display in the touch panel input device in which the display autonomously switches. Another object of the present invention is to provide a touch panel input device and a control method of the touch panel input device that can display auxiliary information of a displayed object.

### Solution to Problem

To attain the objects, the present invention provides a device according to claim 1 and a method according to claim 4.

### Advantageous Effects of Invention

In the present invention, when the touch panel detects proximity of a contact body, the display in the display does not switch after the detection of the proximity and detection of contact of the contact body by the touch panel, until contact is no longer detected. Therefore, after the user brings the contact body, such as a finger, close to the touch panel in order to designate an object displayed on the display, the display in the display is not switched until the contact of the contact body is no longer detected. This can prevent a wrong operation from being caused by a switch of the display in the touch panel input device in which the display autonomously switches.

Furthermore, when the touch panel detects proximity of a contact body, a guide of operation of a case which an area of the touch panel where the proximity is detected is contacted, is displayed. Therefore, auxiliary information of a displayed object can be displayed.

### Brief Description of Drawings

Figure 1a is a diagram for explaining normal operation in a general touch panel input device.
Figure 1b is a diagram for explaining the normal operation in the general touch panel input device.
Figure 1c is a diagram for explaining the normal operation in the general touch panel input device.
Figure 1d is a diagram for explaining the normal operation in the general touch panel input device.
Figure 2a is a diagram for explaining wrong operation in a general touch panel input device.
Figure 2b is a diagram for explaining the wrong operation in the general touch panel input device.
Figure 2c is a diagram for explaining the wrong operation in the general touch panel input device.
Figure 2d is a diagram for explaining the wrong operation in the general touch panel input device.
Figure 3 is a block diagram showing an exemplary embodiment of a touch panel input device of the present invention.
Figure 4 is a diagram for explaining a mechanism of detecting proximity and contact operation of a contact body in a touch panel shown in Figure 3.
Figure 5 is a diagram for explaining the mechanism of detecting the proximity and contact operation of the contact body in the touch panel shown in Figure 3.
Figure 6a is a diagram showing a state of operation for the touch panel shown in Figure 3.
Figure 6b is a diagram showing a display method in a display according to the operation for the touch panel shown in Figure 3.
Figure 7 is a flow chart for explaining operation of a smartphone shown in Figure 3.
Figure 8a is a diagram showing an example of operation of the smartphone shown in Figure 3.
Figure 8b is a diagram showing the example of operation of the smartphone shown in Figure 3.
Figure 8c is a diagram showing the example of operation of the smartphone shown in Figure 3.
Figure 8d is a diagram showing the example of operation of the smartphone shown in Figure 3.
Figure 9a is a diagram showing another example of operation of the smartphone shown in Figure 3.
Figure 9b is a diagram showing another example of operation of the smartphone shown in Figure 3.
Figure 9c is a diagram showing another example of operation of the smartphone shown in Figure 3.
Figure 9d is a diagram showing another example of operation of the smartphone shown in Figure 3.
Figure 10a is a diagram showing another example of operation of the smartphone shown in Figure 3.
Figure 10b is a diagram showing another example of operation of the smartphone shown in Figure 3.
Figure 10c is a diagram showing another example of operation of the smartphone shown in Figure 3.
Figure 11 a is a diagram showing an example of operation in the touch panel input device of the present invention.
Figure 11b is a diagram showing an example of operation in the touch panel input device of the present invention.
Figure 12a is a diagram for explaining an example of operation of the smartphone shown in Figure 3.
Figure 12b is a diagram for explaining an example of operation of the smartphone shown in Figure 3.
Figure 12c is a diagram for explaining an example of operation of the smartphone shown in Figure 3.
Figure 13a is a diagram for explaining another example of operation of the smartphone shown in Figure 3.
Figure 13b is a diagram for explaining another example of operation of the smartphone shown in Figure 3.
Figure 13c is a diagram for explaining another example of of the smartphone shown in Figure 3.

### Description of Embodiments

Hereinafter, exemplary embodiments will be described with reference to the drawings.

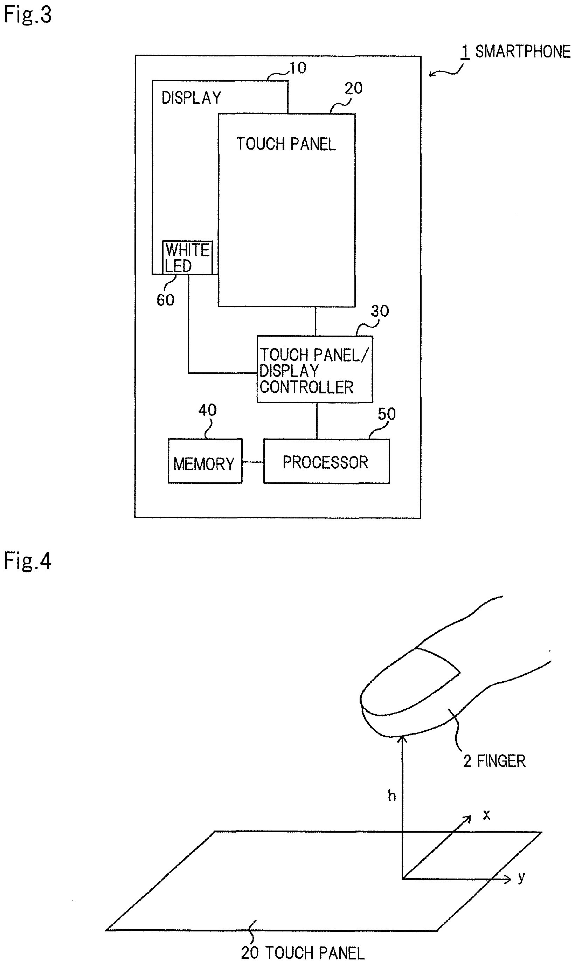

Figure 3 is a block diagram showing an exemplary embodiment of a touch panel input device of the present invention.

As shown in Figure 3, the exemplary embodiment provides smartphone 1 including touch panel 20 as input means, display 10 as display means, touch panel/display controller 30, processor 50, and memory 40. Although touch panel 20 and display 10 are not on top of each other in the illustration, in reality, touch panel 20 is structured physically on top of display 10.

Display 10 is made of liquid crystal or the like, and touch panel/display controller 30 controls display 10 to display information such as an image. White LED 60 is included as a backlight source.

Touch panel 20 detects proximity and contact operation when a contact body, such as a finger, performs the proximity and contact operation. For example, an electrostatic capacity type may be used.

Memory 40 stores information.

Processor 50 controls operation of a communication function or the like in smartphone 1 based on program control.

Touch panel/display controller 30 controls the display of information in display 10 based on instructions from processor 50 and receives input corresponding to contact operation detected by touch panel 20. Touch panel/display controller 30 also autonomously switches the display in display 10 in case an interruption occurs when the predetermined time has expired or the voice call has received. In the control of touch panel 20, there are two states, contacting touch panel 20 (contact by finger is sensed) and proximity to touch panel 20 (access by finger is sensed, and the mode is exited at the same time as the contact).

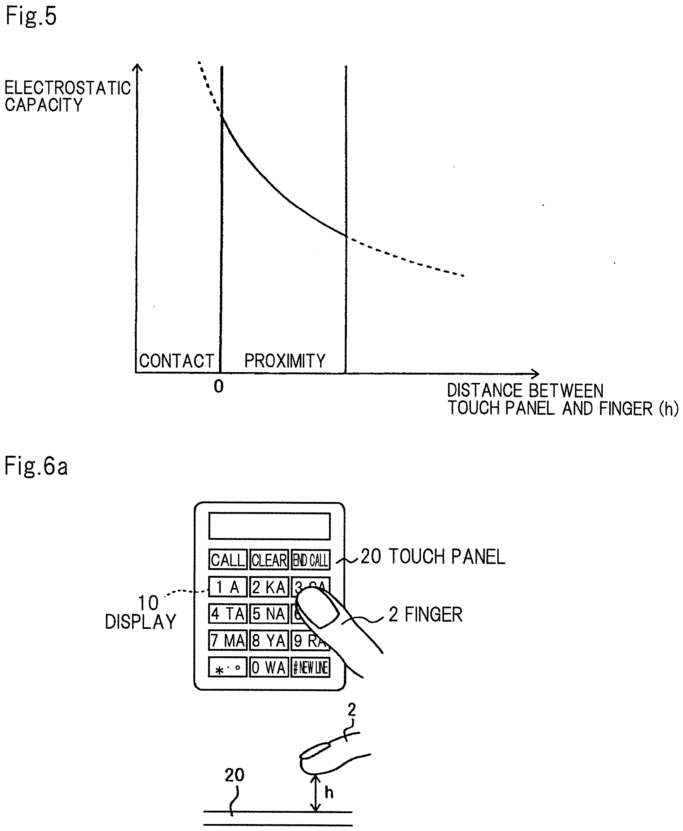

Figures 4 and 5 are diagrams for explaining a mechanism of detecting proximity and a contact operation by a contact body in touch panel 20 shown in Figure 2.

Touch panel/display controller 30 shown in Figure 3 has a mechanism that can detect coordinates (x, y) of touch panel 20 as shown in Figure 4 in the two states described above. A condition for determining whether the operation of touch panel 20 is a contact operation or a proximity operation is dependent on distance h from touch panel 20 to finger 2.

For example, when touch panel 20 is an electrostatic capacity type, the electrostatic capacity and distance h are correlated as shown in Figure 5. Therefore, a certain threshold of the electrostatic capacity is set. It is determined that the operation is a proximity operation if the detected electrostatic capacity is equal to or greater than the threshold, and it is determined that the operation is a contact operation if the detected electrostatic capacity is smaller than the threshold. This is a method of determining a contact operation and a proximity operation in a general electrostatic capacity scheme.

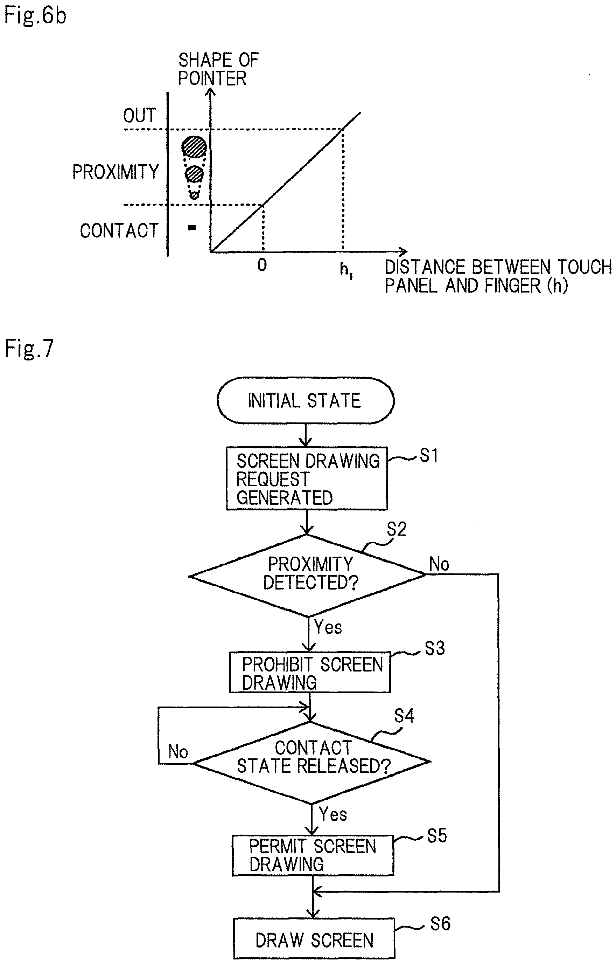

Figure 6a is a diagram showing a state of operation for touch panel 20 shown in Figure 3. Figure 6b is a diagram showing a display method in display 10 according to the operation for touch panel 20 shown in Figure 3.

As shown in Figure 6a, when finger 2 approaches touch panel 20, the shape of a pointer displayed on display 10 changes according to distance h from touch panel 20 to finger 2.

For example, as shown in Figure 6b, in the state in which it is determined that the operation is a proximity operation, radius r of the pointer displayed on display 10 can be changed according to distance h to facilitate selection in the state in which finger 2 is approaching touch panel 20. This can be carried out by of a method of reducing radius r of the pointer when distance h is reduced or a method of increasing radius r of the pointer when distance h is reduced or and a method of not changing radius r (or dot) of the pointer even when distance h is changed.

Hereinafter, operation of smartphone 1 configured as described above will be described.

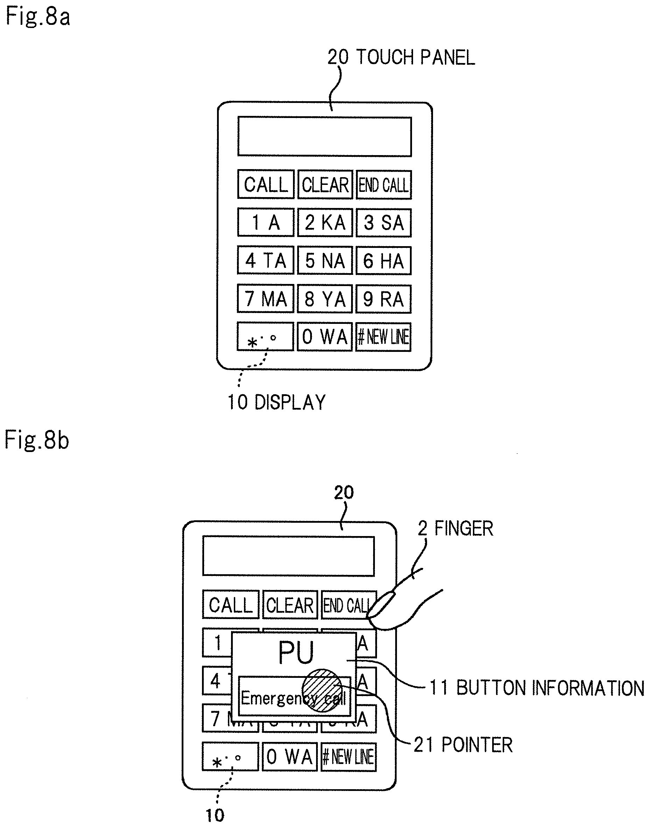

Figure 7 is a flow chart for explaining operation of smartphone 1 shown in Figure 3. Figures 8a to 8d are diagrams showing an example of the operation of smartphone 1 shown in Figure 3.

Smartphone 1 shown in Figure 3 is operated as shown in Figure 8a, and button information 11 is displayed on display 10 as shown in Figure 8b based on a request from processor 50. In this state, when processor 50 generates a screen drawing request for autonomously switching the display in display 10 due to an interruption, such that the predetermined time has expired or the voice call has received (step 1), touch panel/display controller 30 determines whether a proximity operation is detected in touch panel 20 (step 2).

When the proximity operation is detected in touch panel 20, the screen drawing is prohibited, and the display in display 10 is not switched (step 3). In this case, pointer 21 is displayed on button information 11 as shown in Figure 8b.

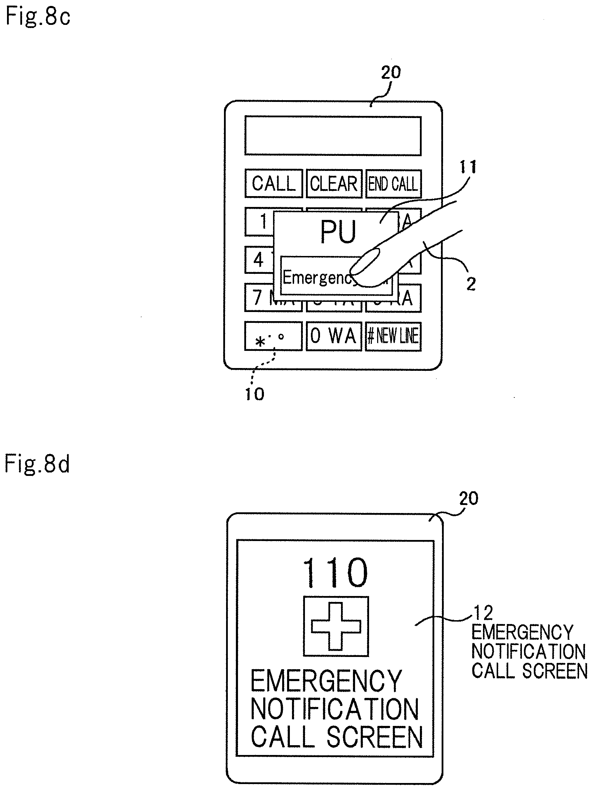

As a result, in the state in which button information 11 is displayed on display 10 as shown in Figure 8c, finger 2 can touch the area where button information 11 is displayed, and on operation according to the contact operation for button information 11 is performed. Emergency notification call screen 12 according to the operation will be displayed as shown in Figure 8d. In this case, since finger 2 is not making contact with touch panel 20 after a contact operation was carried out by touching button information 11 (step 4), the screen drawing is permitted (step 5), and the display of display 10 will be switched (step 6).

In this way, in the exemplary embodiment, when touch panel 20 detects the proximity of finger 2 based on the control by touch panel/display controller 30, button information 11 as an object to be designated by the user does not disappear until the contact is no longer detected after detection of proximity and the detection of contact by finger 2 in touch panel 20. As a result, there is no difference in the screen display of display 20 between when finger 2 approaches touch panel 10 to designate button information 11 displayed on touch panel 10 and when finger 2 subsequently contacts touch panel 20. Thus, the wrong operation as shown in Figures 2c and 2d can be avoided.

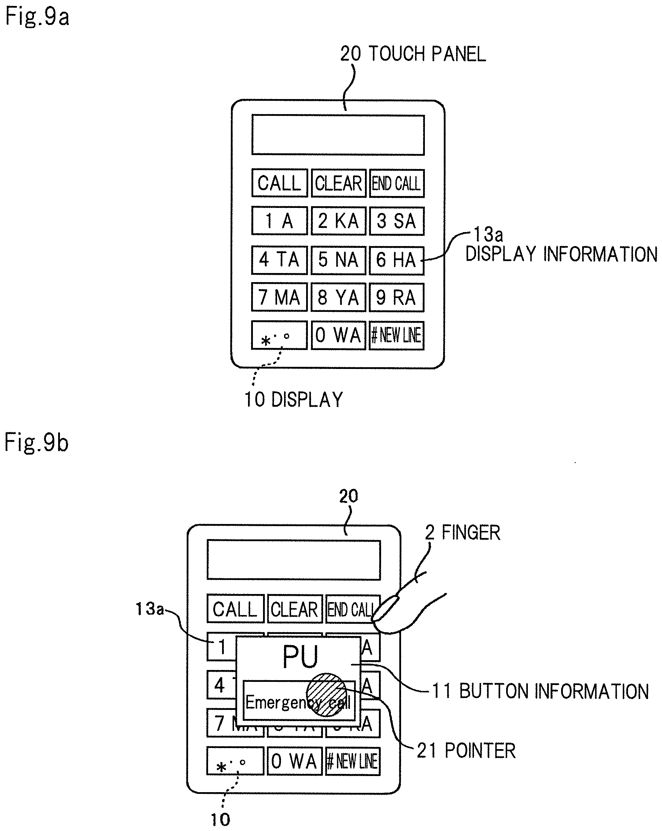

Figures 9a to 9d are diagrams showing another example of operation of smartphone 1 shown in Figure 3.

As shown in Figures 9a to 9d, information displayed in an area other than button information 11 contacted by finger 2 among the information displayed on touch panel 20 may be switched.

As shown in Figure 9a, display information 13a is displayed on display 10 of smartphone 1 shown in Figure 3. In the state in which button information 11 is displayed on display 10 as shown in Figure 9b based on a request from processor 50, when a screen drawing request for autonomously switching the display in display 10 is generated in processor 50 due to an interruption such that the predetermined time has expired, touch panel/display controller 30 determines whether a proximity operation is detected in touch panel 20.

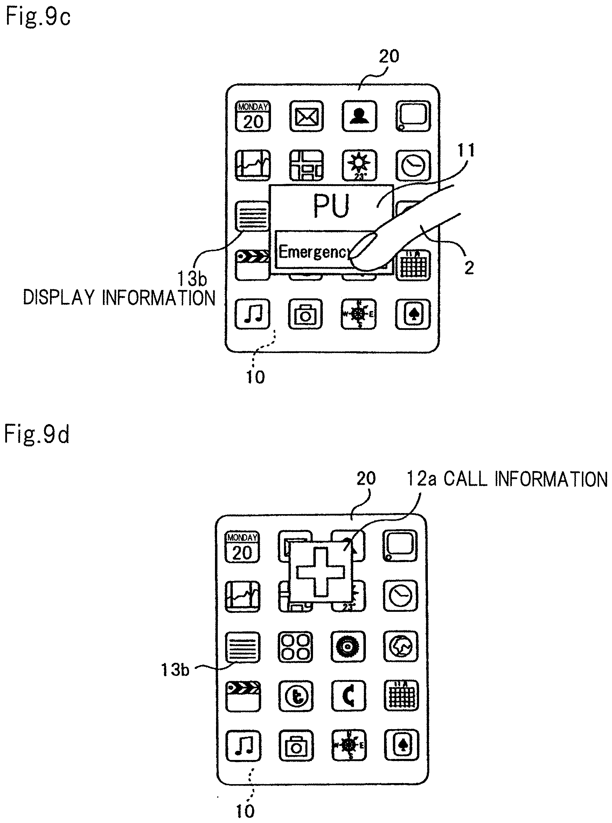

Then, if the proximity operation is detected in touch panel 20, the screen drawing is prohibited. As shown in Figure 9c, only button information 11 approached by finger 2 among the information displayed on display 10 is not switched, and only display information 13a displayed in the other areas is switched to display information 13b.

As a result, in the state in which button information 11 remains displayed on display 10, finger 2 can touch the area displaying button information 11, and an operation according to the contact operation for button information 11 is performed. As shown in Figure 9d, call information 12a according to the operation is to be displayed. In this case, since finger 2 is not in contact with touch panel 20 after the contact operation for button information 11 is performed, button information 11 disappears, and the display of display 10 is switched.

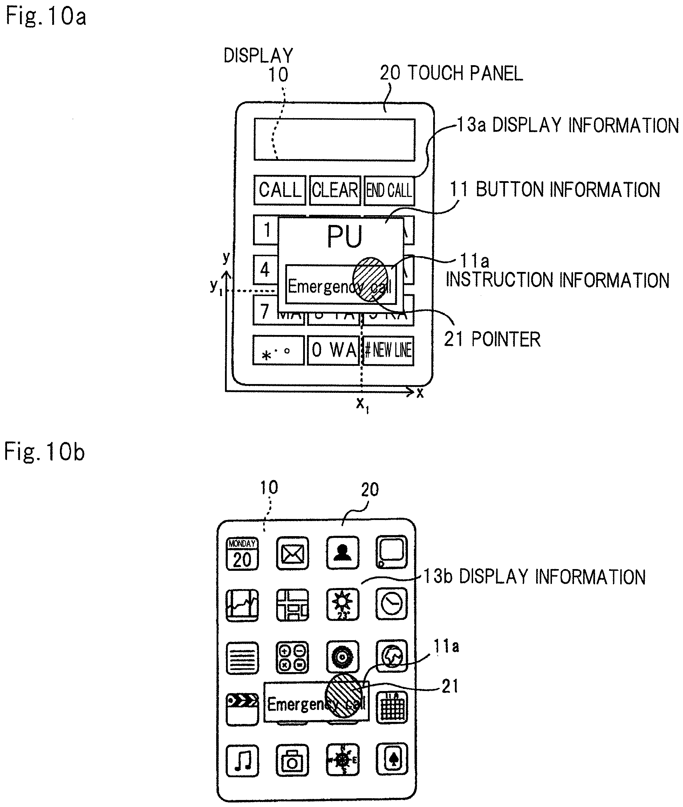

Figures 10a to 10c are diagrams showing another example of the operation of smartphone 1 shown in Figure 3.

As shown in Figures 10a to 10c, coordinates (x, y) where finger 2 is approaching touch panel 10 can be detected, and a unit in which the display is not switched can be just a button displayed on the coordinates. Then, the screen other than the button can be switched.

As shown in Figure 10a, display information 13a is displayed on display 10 of smartphone 1 shown in Figure 3, and button information 11 is displayed on display 10 based on a request from processor 50. In this state, when a screen drawing request for autonomously switching the display in display 10 is generated in processor 50 due an interruption such that the predetermined time has expired, touch panel/display controller 30 determines a whether proximity operation is detected in touch panel 20.

Then, if a proximity operation is detected in touch panel 20, the screen drawing is prohibited. As shown in Figure 10b, only instruction information 11a included in button information 11 approached by finger 2 among the information displayed on display 10 is not switched. Other parts of button information 11 disappear, and display information 13a displayed in areas other than button information 11 is switched to display information 13b.

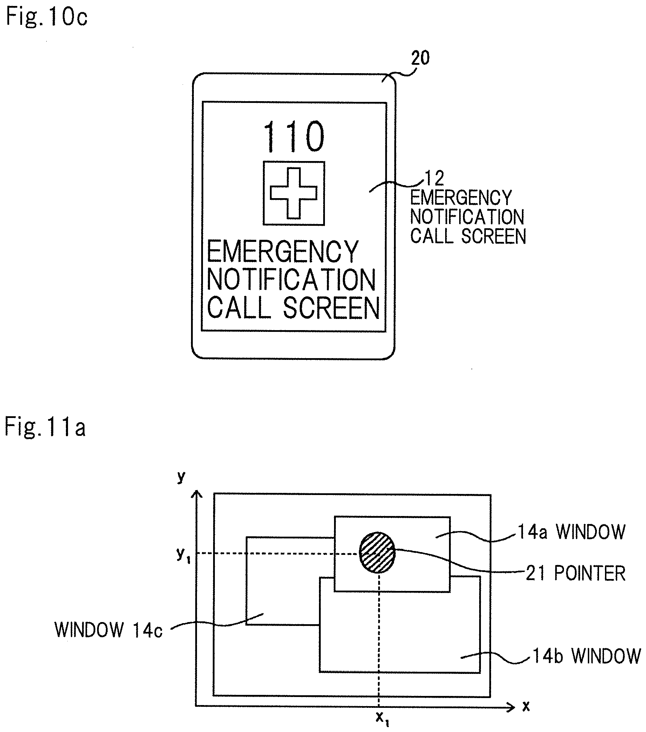

As a result, in the state in which instruction information 11a of button information 11 remains displayed on display 10, finger 2 can contact the area displaying instruction information 11a, and an operation according to the contact operation for instruction information 11a is performed. As shown in Figure 10c, emergency notification call screen 12 according to the operation will be displayed. In this case, since finger 2 is not in contact with touch panel 20 after the contact operation for instruction information 11a is performed, instruction information 11a disappears, and the display of display 10 will be switched.

Other than smartphone 1, coordinates (x, y) approached by a contact body can be detected in a state in which a plurality of windows are displayed in a device with a large display area, such as a tablet and a personal computer, and only the display of the window including the coordinates may not be switched similarly as described above.

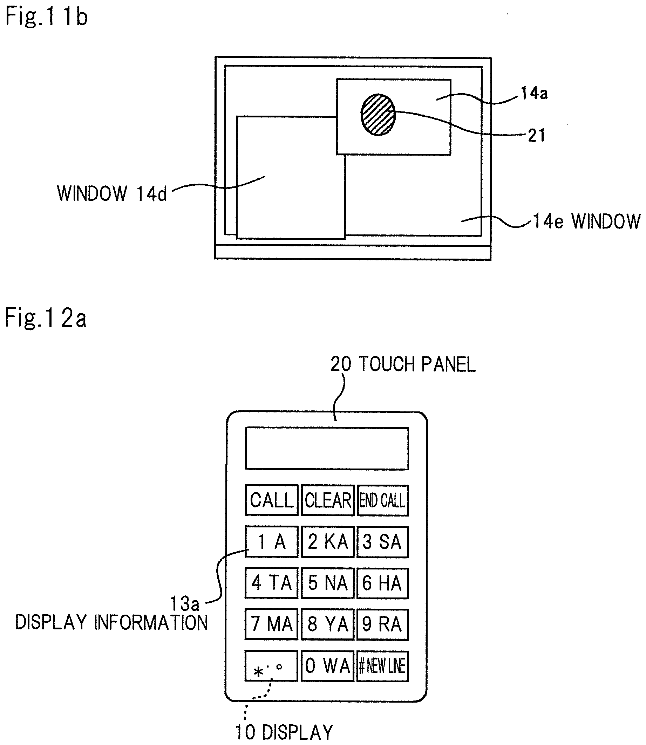

Figures 11a and 11b are diagrams showing an example of an operation in the touch panel input device of the present invention.

As shown in Figure 11a, when an interruption or the like occurs in a state in which a plurality of windows 14a to 14c are displayed on the display of the touch panel input device, it may not switch the display of just window 14a approached by the finger and displayed pointer 21 but may also switch other windows 14b and 14c to windows 14d and 14e as shown in Figure 11b.

As a result, even if the information displayed on the display is switched due to an interruption or the like, only the window to be touched remains, and the user can make a desired selection. Even in this case, the window may disappear if the state is no longer the proximity state.

### (Other Examples)

In examples, when touch panel 20 detects proximity of a contact body, touch panel/display controller 30 in smartphone 1 with the configuration shown in Figure 3 displays a guide of operation of a case which an area of touch panel 20 where the proximity is detected is contacted.

Figures 12a to 12c are diagrams for explaining an example of an operation of smartphone 1 shown in Figure 3.

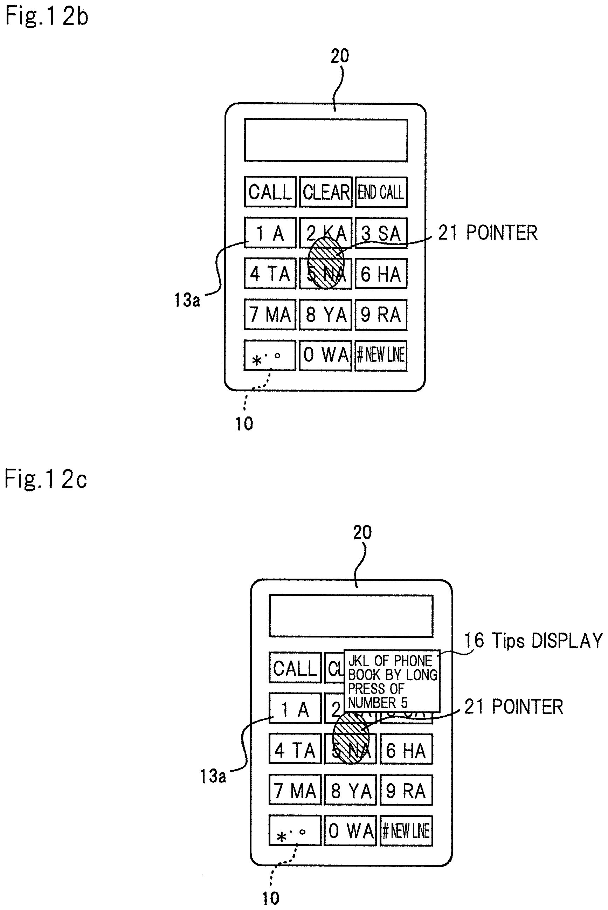

As shown in Figure 12a, in a state in which display information 13a including a numeric keypad of phone numbers is displayed on display 10 of smartphone 1 shown in Figure 3, the finger of the user approaches to display 10, and thereby pointer 21 displayed on display 10 stays for a certain time on coordinates (x, y) of the same object on display 10 as shown in Figure 12b. In this case, Tips display 16 as a guide display of an operation when the object is touched is performed as shown in Figure 12c. This may be a pop-up display or a balloon. The example tells the user of a function in which phone numbers are input by simple touch operation, and JKL of the phone book are displayed with long press.

The operation is often unclear unless keys of touch panel 20 are selected. On the other hand, the mouse of a general personal computer or the like has a function of displaying the guide of the object as Tips, without selecting the object. Because the function is included, the proximity state of the touch panel and the approached (X, Y) coordinates are used to display Tips. As a result, the function of displaying the guide of the key can be realized without operating the touch panel.

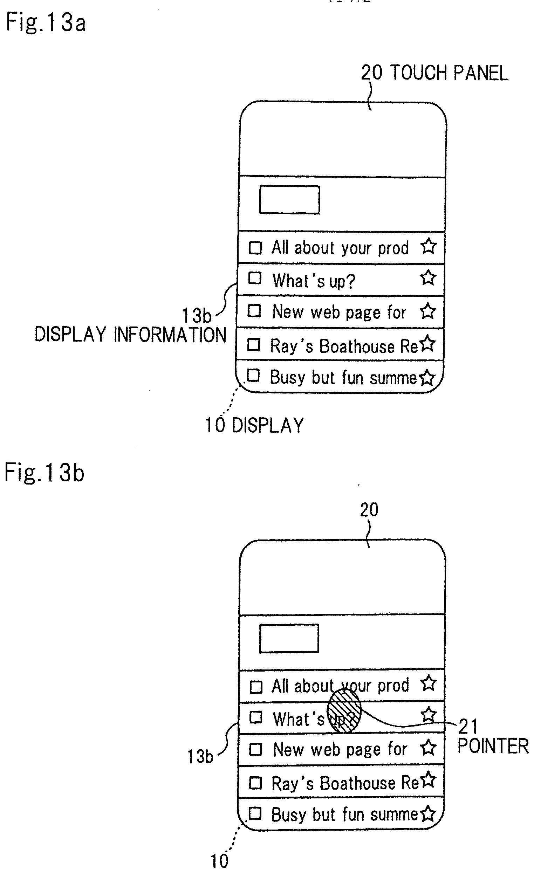

Figures 13a to 13c are diagrams for explaining another example of an operation of smartphone 1 shown in Figure 3.

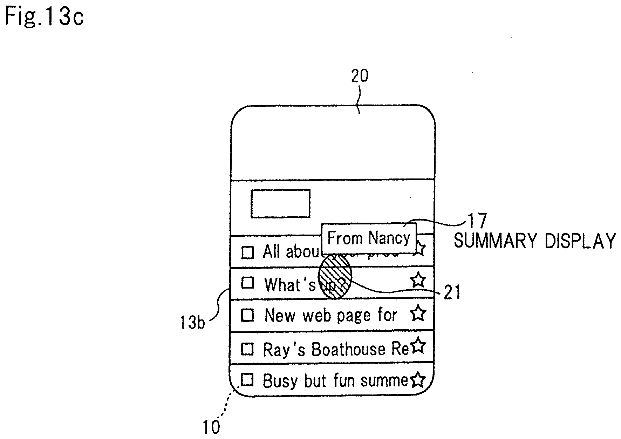

As shown in Figure 13a, in a state in which display information 13b including a plurality of items is displayed on display 10 of smartphone 1 shown in Figure 3, the finger of the user approaches to display 10, and thereby pointer 21 displayed on display 10 stays for a certain time at coordinates (x, y) of the same object on display 10 as shown in Figure 13b. In this case, as shown in Figure 13c, summary display 17 can be indicated, or an item in one layer below may be displayed.

When a list of email is displayed, a text of email can be displayed as Tips. When a list of a phone book is displayed, an item in one layer below may be displayed, or the set content may be displayed.

Although the present invention has been described with reference to the exemplary embodiments, the present invention is not limited to the exemplary embodiments. Various changes that can be understood by those skilled in the art can be made for the configurations and details of the present invention within the scope of the present invention.

## Claims

1. A touch panel input device comprising:
a display (10) configured to display information;
a touch panel (20) that is being arranged on said display (10) and configured to detect proximity and contact operation of a contact body; and
a controller (30) that is configured to control the display of the information in said display (10) and receive input according to the contact operation detected at said touch panel (20), said controller (30) configured to autonomously switch the displayed information in said display (10) when an interruption occurs,
wherein when said touch panel (20) detects proximity operation of the contact body, said controller (30) is configured not to switch the displayed information in said display (10) after the detection of the proximity and detection of contact operation of the contact body with said touch panel (20), until the contact operation of the contact body with said touch panel (20) is not detected, even if the interruption such as an incoming call occurs;
wherein proximity operation of the contact body is a detected electrostatic capacity that is equal to or greater than a predetermined threshold, and
wherein contact operation of the contact body is the detected electrostatic capacity that is smaller than the predetermined threshold.

2. The touch panel input device according to claim 1, wherein
when said touch panel (20) is configured to detect proximity operation of the contact body, said controller (30) is configured not to switch just the display of an area where proximity to the display in said display (10) is detected until the contact operation of the contact body is not detected by said touch panel (20).

3. The touch panel input device according to claim 1, wherein
when said touch panel (20) is configured to detect proximity of the contact body in a state in which a plurality of windows (14a, 14b, 14c, 14d, 14e) are displayed on said display (10), said controller (30) configured not to switch just a window displayed in an area where proximity operation to the window in said display (10) is detected until proximity operation to the window in said display (10) is not detected by said touch panel (20).

4. A control method of a touch panel input device comprising:
displaying information on a display (10);
detecting proximity and contact operation of a contact body on a touch panel (20) that is arranged on said display (10); and
controlling the display of the information in said display (10) and receiving input according to the contact operation detected at said touch panel (20), autonomously switching the displayed information in said display (10) via a controller (30) when an interruption occurs,
wherein when said touch panel (20) detects proximity operation of the contact body, the displayed information in said display (10) is not switched after the detection of the proximity operation and detection of the contact operation of the contact body at said touch panel (20), until the contact operation of the contact body are not detected, even if the interruption such as an incoming call occurs;
wherein the proximity operation of the contact body is a detected electrostatic capacity that is equal to or greater than a predetermined threshold, and
wherein the contact operation of the contact body is the detected electrostatic capacity that is smaller than the predetermined threshold.

## Patentansprüche

1. Berührfeld-Eingabevorrichtung mit
einer Anzeige (10), die dafür ausgelegt ist, Informationen anzuzeigen,
einem Berührfeld (20), das auf der Anzeige (10) angeordnet ist und dafür ausgelegt ist, einen Annäherungs- und Kontaktvorgang eines Kontaktkörpers zu erkennen, und
einer Steuereinrichtung (30), die dafür ausgelegt ist, die Anzeige der Informationen auf der Anzeige (10) zu steuern und eine Eingabe entsprechend dem am Berührfeld (20) erkannten Kontaktvorgang zu empfangen, wobei die Steuereinrichtung (30) dafür ausgelegt ist, autonom die auf der Anzeige (10) angezeigten Informationen zu wechseln, wenn eine Unterbrechung auftritt,
wobei, wenn das Berührfeld (20) einen Annäherungsvorgang des Kontaktkörpers erkennt, die Steuereinrichtung (30) dafür ausgelegt ist, nach der Erkennung der Nähe und eines Kontaktvorgangs des Kontaktkörpers mit dem Berührfeld (20) die auf der Anzeige (10) angezeigten Informationen nicht zu wechseln, bis der Kontaktvorgang zwischen dem Kontaktkörper und dem Berührfeld (20) nicht mehr erkannt wird, selbst wenn eine Unterbrechung in der Art eines eingehenden Rufs auftritt,
wobei der Annäherungsvorgang des Kontaktkörpers mit einer erkannten elektrostatischen Kapazität verbunden ist, die größer oder gleich einer vorgegebenen Schwelle ist, und
wobei der Kontaktvorgang des Kontaktkörpers mit einer erkannten elektrostatischen Kapazität verbunden ist, die kleiner als die vorgegebene Schwelle ist.

2. Berührfeld-Eingabevorrichtung nach Anspruch 1, wobei
wenn das Berührfeld (20) dafür ausgelegt ist, einen Annäherungsvorgang des Kontaktkörpers zu erkennen, die Steuereinrichtung (30) dafür ausgelegt ist, lediglich die Anzeige eines Bereichs, in dem die Annäherung an die Anzeige (10) erkannt wird, nicht zu wechseln, bis der Kontaktvorgang des Kontaktkörpers durch das Berührfeld (20) nicht mehr erkannt wird.

3. Berührfeld-Eingabevorrichtung nach Anspruch 1, wobei
wenn das Berührfeld (20) dafür ausgelegt ist, die Nähe des Kontaktkörpers in einem Zustand zu erkennen, in dem mehrere Fenster (14a, 14b, 14c, 14d, 14e) auf der Anzeige (10) angezeigt werden, die Steuereinrichtung (30) dafür ausgelegt wird, lediglich ein Fenster, das in einem Bereich angezeigt wird, in dem der Annäherungsvorgang an das Fenster in der Anzeige (10) erkannt wird, nicht zu wechseln, bis der Annäherungsvorgang an das Fenster in der Anzeige (10) durch das Berührfeld (20) nicht mehr erkannt wird.

4. Verfahren zur Steuerung einer Berührfeld-Eingabevorrichtung mit den Schritten:
Anzeigen von Informationen auf einer Anzeige (10),
Erkennen eines Annäherungs- und Kontaktvorgangs eines Kontaktkörpers auf einem Berührfeld (20), das auf der Anzeige (10) angeordnet ist, und
Steuern der Anzeige der Informationen auf der Anzeige (10) und Empfangen einer Eingabe entsprechend dem am Berührfeld (20) erkannten Kontaktvorgang, wobei die auf der Anzeige (10) angezeigten Informationen durch eine Steuereinrichtung (30) autonom gewechselt werden, wenn eine Unterbrechung auftritt,
wobei, wenn das Berührfeld (20) einen Annäherungsvorgang des Kontaktkörpers erkennt, die auf der Anzeige (10) angezeigten Informationen nach der Erkennung des Annäherungsvorgangs und des Kontaktvorgangs des Kontaktkörpers am Berührfeld (20) nicht gewechselt werden, bis der Kontaktvorgang des Kontaktkörpers nicht mehr erkannt wird, selbst wenn eine Unterbrechung in der Art eines eingehenden Rufs auftritt,
wobei der Annäherungsvorgang des Kontaktkörpers mit einer erkannten elektrostatischen Kapazität verbunden ist, die größer oder gleich einer vorgegebenen Schwelle ist, und
wobei der Kontaktvorgang des Kontaktkörpers mit einer erkannten elektrostatischen Kapazität verbunden ist, die kleiner als die vorgegebene Schwelle ist.

## Revendications

1. Dispositif d'entrée d'écran tactile comprenant :
un afficheur (10) configuré pour afficher des informations ;
un écran tactile (20) agencé sur ledit afficheur (10) et configuré pour détecter une opération de proximité et de contact d'un corps de contact ; et
un dispositif de commande (30) configuré pour commander l'affichage des informations dans ledit afficheur (10) et recevoir une entrée selon l'opération de contact détectée au niveau dudit écran tactile (20), ledit dispositif de commande (30) étant configuré pour commuter de façon autonome les informations affichées dans ledit afficheur (10) lorsqu'une interruption se produit,
dans lequel, lorsque ledit écran tactile (20) détecte une opération de proximité du corps de contact, ledit dispositif de commande (30) est configuré pour ne pas commuter les informations affichées dans ledit afficheur (10) après la détection de la proximité et la détection de l'opération de contact du corps de contact avec ledit écran tactile (20), jusqu'à ce que l'opération de contact du corps de contact avec ledit écran tactile (20) ne soit pas détectée, même si l'interruption telle qu'un appel entrant se produit ;
dans lequel une opération de proximité du corps de contact est une capacité électrostatique détectée qui est supérieure ou égale à un seuil prédéterminé, et
dans lequel une opération de contact du corps de contact est la capacité électrostatique détectée qui est plus petite que le seuil prédéterminé.

2. Dispositif d'entrée d'écran tactile selon la revendication 1, dans lequel
lorsque ledit écran tactile (20) est configuré pour détecter une opération de proximité du corps de contact, ledit dispositif de commande (30) est configuré pour ne pas commuter simplement l'affichage d'une zone où une proximité de l'affichage dans ledit afficheur (10) est détectée jusqu'à ce que l'opération de contact du corps de contact ne soit pas détectée par ledit écran tactile (20).

3. Dispositif d'entrée d'écran tactile selon la revendication 1, dans lequel
lorsque ledit écran tactile (20) est configuré pour détecter une proximité du corps de contact dans un état dans lequel une pluralité de fenêtres (14a, 14b, 14c, 14d, 14e) est affichée sur ledit afficheur (10), ledit dispositif de commande (30) est configuré pour ne pas commuter simplement une fenêtre affichée dans une zone où une opération de proximité sur la fenêtre dans ledit afficheur (10) est détectée jusqu'à ce qu'une opération de proximité sur la fenêtre dans ledit afficheur (10) ne soit pas détectée par ledit écran tactile (20).

4. Procédé de commande d'un dispositif d'entrée d'écran tactile comprenant :
afficher des informations sur un afficheur (10) ;
détecter une opération de proximité et de contact d'un corps de contact sur un écran tactile (20) qui est agencé sur ledit afficheur (10) ; et
commander l'affichage des informations dans ledit afficheur (10) et recevoir une entrée selon l'opération de contact détectée au niveau dudit écran tactile (20),
commuter de façon autonome des informations affichées dans ledit afficheur (10) via un dispositif de commande (30) lorsqu'une interruption se produit,
dans lequel, lorsque ledit écran tactile (20) détecte une opération de proximité du corps de contact, les informations affichées dans ledit afficheur (10) ne sont pas commutées après la détection de l'opération de proximité et la détection de l'opération de contact du corps de contact au niveau dudit écran tactile (20), jusqu'à ce que l'opération de contact du corps de contact ne soit pas détectée, même si l'interruption telle qu'un appel entrant se produit ;
dans lequel l'opération de proximité du corps de contact est une capacité électrostatique détectée qui est supérieure ou égale à un seuil prédéterminé, et
dans lequel l'opération de contact du corps de contact est la capacité électrostatique détectée qui est plus petite que le seuil prédéterminé.
